# EUROPÄISCHE PATENTSCHRIFT

(11) **EP 0 611 249 B1**
(45) Veröffentlichungstag und Bekanntmachung des Hinweises auf die Patenterteilung: **01.09.1999**
(21) Anmeldenummer: 94810040.9
(22) Anmeldetag: 24.01.1994
(51) Int. Cl.: B01J 20/34, B01D 37/02

(54) **Verfahren zur Reinigung eines Filterhilfsmittels durch Zusatz von Enzymen**
Process for filter-aid cleaning using enzymes
Procédé pour le nettoyage d'adjuvant de filtration faisant intervenir des enzymes

(30) Priorität: 12.02.1993 CH 44193
(43) Veröffentlichungstag der Anmeldung: 17.08.1994
(73) Patentinhaber: Filtrox AG, 9000 St. Gallen (CH)
(72) Erfinder: Kiefer, Johannes, Dr., CH-9030 Abtwil (CH); Girr, Manfred, CH-9032 Engelburg (CH); Smaal, Auckens Jan, CH-9400 Rorschach (CH); Lippuner, Brigitte, CH-9016 St. Gallen (CH)
(74) Vertreter: Hepp, Dieter

(56) Entgegenhaltungen:
- EP-A- 0 253 233
- WO-A-92/13807
- FR-A- 1 177 924
- FR-A- 2 443 281

## Beschreibung

Die Erfindung betrifft ein Verfahren zur Reinigung eines Filterhilfsmittels. Während des Herstellungsprozesses der meisten Getränke muss als einer der letzten Prozessschritte eine Klärung des Produktes erfolgen. Dieser Klärschritt kann mit unterschiedlichen Techniken, wie der Zentrifugation, der Sedimentation, der Flotation oder der Filtration erfolgen. Oft werden mehrere solcher Trenntechniken nacheinander angewandt, um einen optimalen Kläreffekt zu erreichen. Dies gilt vor allem für solche Getränken, die durch eine alkoholische Gärung oder aus Trauben oder sonstigen Früchten durch Abpressen hergestellt werden.

Die Filtration ist das dabei am häufigsten eingesetzte Trennverfahren, da über die Art der Filtration und die verwendete Trennschärfe eine optimale Anpassung des Prozesses an das Produkt und an den Produktionsschritt möglich ist. Beispielsweise sind dabei Kuchenfiltrationen mit Druck- oder Vakuumfiltern, Anschwemmfiltrationen unter Verwendung von Filterhilfsmitteln, die Verwendung von Tiefenfiltern wie z.B. Filterschichten oder Oberflächenfiltern wie z.B. Membranen möglich.

Ein vor allem bei der Herstellung von Fruchtsäften und alkoholischen Getränken wie Wein oder Bier sehr häufig eingesetztes Filtrationsverfahren ist die Anschwemmfiltration unter Verwendung von Kieselgur als Anschwemmaterial. Hierbei wird auf einem Trägermaterial - dies können Filterschichten aus Zellulose, Drahtgewebe oder Spaltrohrsiebe sein - zunächst eine Schicht einer groben Kieselgur mit einer Permeabilität von 600 - 1000 mDarcy aufgebracht. Diese Schicht dient zur Überbrückung der Spalte im Trägermaterial und als Träger der nächsten Grundanschwemmung mit feinerer Gur. Im Laufe des Filtrationsprozess wird ständig Gur zudosiert. Der Prozess kann über Art und Menge der verwendeten Kieselguren und die Trübung des Filtrats gesteuert werden.

Während dieses - in der Regel diskontinuierlich betriebenen - Prozesses wird ein Filterkuchen erzeugt, der aus einer Mischung der zudosierten Kieselgur und der aus dem Produkt entfernten Trubstoffe besteht. Dieses Gemisch kann in der vorliegenden Form nicht mehr zur Filtration verwendet werden und wird nach dem heutigen Stand der Technik in der Regel als Abfall entsorgt. Dabei ist eine Deponierung, eine Kompostierung oder eine Ausbringung auf landwirtschaftlichen Flächen möglich. Diese Entsorgungsmöglichkeiten sind jedoch nur begrenzt nutzbar, da bestimmte Bedingungen erfüllt sein müssen. Als Beispiel kann die Stichfestigkeit als Bedingung für die Deponierung genannt werden. Dies setzt jedoch eine Zwangsentwässerung auf einen Wassergehalt von höchstens ca. 35 % voraus, was praktisch nur mittels einer Presse möglich ist. Die Entwässerungskosten fallen dabei zusätzlich zu den Kosten der Deponierung an. Die gleichen Probleme treten bei anderen Filterhilfsmitteln, wie vor allem bei Perliten, Zellulose, Silicagelen, Glas oder Mischungen solcher Filterhilfsmittel auf.

Aus diesen Gründen wird seit einiger Zeit versucht, durch eine Reinigung oder Regenerierung eine Trennung des Filterhilfsmittels von den angelagerten Trubpartikeln zu erreichen. Dazu wurden bereits mehrere Verfahren vorgeschlagen. So beschreiben Finis und Galaske (Brauwelt, Nr. 50/51, 1988, S. 2370) die thermische Reinigung von Kieselgurtrub aus Brauereibetrieben. Dabei wird zunächst in einem Misch- und Ausgleichsbecken der von unterschiedlichen Betrieben angelieferte Kieselgurtrub zu einer Mischung verarbeitet. Diese Mischung wird anschliessend mechanisch entwässert. Erfahrungsgemäss verbleiben im abgepressten Filterkuchen dann etwa 50 - 55 GG% Wasser. Im nächsten Prozessschritt wird der an der Kieselgur angelagerte Trub, der hauptsächlich aus Hefe und Proteinen besteht, durch Erhitzen der Kieselgur auf 700 - 780 °C ausgeglüht. Als letzter Schritt wird eine Sichtung zur Einstellung eines bestimmten Permeabilitätsbereiches des Regenerates durchgeführt. Nachteilig an diesem Verfahren sind zu werten:
- der hohe Energieaufwand, der durch den Trocknungs- und Glühvorgang erforderlich ist,
- die Vermischung unterschiedlicher Kieselguren,
- die niedrige Recyclingrate, da nur etwa 50 % der von den Brauereien angelieferten Kieselguren wieder zu Filtrationszwecken in diesen Betrieben eingesetzt werden können,
- der Transportaufwand für den Transport zu und von der zentralen Aufarbeitung zu den Verwenderbetrieben.

Ein weiteres, dezentral beim Verwender betriebenes Verfahren der Aufarbeitung wird von Sommer (Brauwelt, Nr.5 1990, S. 151 bzw. Europäisches Patent 0 253 233 B1) beschrieben. Dieses System basiert auf einer Auswaschung des Kieselgurtrubes mit Natronlauge bei Temperaturen von 80 - 85 °C, dem anschliessenden Auswaschen der Lauge mit Wasser und verdünnter Schwefelsäure auf einem Bandfilter. Auch dieses Verfahren erreicht lediglich Recyclingraten von etwa 70 %. Als nachteilig sind bei diesem Verfahren zu werten:
- der hohe Verbrauch an Lauge und Säure mit entsprechender Abwasserbelastung,
- hohe Investitionskosten für die mechanisch komplexe Anlage,
- am Regenerat verbleibende organische Restverschmutzung von 2 - 5 %, erfasst durch Glühverlust,
- niedrige Recyclingrate.

Ein weiteres Verfahren zur Regenerierung von Filtermedien wird in der Patentschrift DD 291 702 A5 beschrieben. Hier werden Filterschichten nasszerkleinert und die Trubstoffe in Natronlauge von 0.2 % bis 2 % gelöst. Hier ist nur die einmalige Wiederverwendung zu einer folgenden Anschwemmfiltration vorgesehen, von einem echten Kreislaufprozess kann daher in diesem Fall nicht gesprochen werden.

Auch in der europäischen Patentanmeldung Nr. 0 255 696 A2 wird von einer Regenerierung des Filterhilfsmittels - in diesem Fall Al₂O₃ - in heisser Natronlauge ausgegangen. Auch hier wird mit Laugekonzentrationen von 5 % bis 10 % gearbeitet.

Die FR-2 443 281 zeigt ein Verfahren zur Regenerierung eines mit biologisch abbaubarem organischen Material angereicherten, adsorbierenden Filtermaterials. Die organische Materie wird mit Mikroorganismen angegriffen und in einer Stoffwechselreaktion auf kleinste Bestandteile, gegebenenfalls sogar bis auf Methan abgebaut.

Die WO 92/13807 zeigt ein Verfahren zur Entfernung von Biofilm auf Wänden industrieller Wasseranlagen. Das Wasser eines solchen Systems ist mit einer Kombination mit wenigstens zwei Enzymen und einem Tensid behandelt. Dieses Verfahren lässt sich aufgrund der Verwendung von Tensiden nicht auf die Regeneration von in der Getränkefiltration verwendeten Filterhilfsmitteln übertragen.

Der Erfindung liegt die Aufgabe zugrunde, die Nachteile des Bekannten zu vermeiden, insbesondere also Regeneration oder Reinigung von Filterhilfsmitteln dezentral beim Anwender mit ökonomisch und ökologisch interessanten Randparametern unter Vermeidung der oben genannten Nachteile zu ermöglichen.

Erfindungsgemäss wird diese Aufgabe in erster Linie gemäss Kennzeichen der Patentansprüche gelöst. Insbesondere wird dabei das verunreinigte Filterhilfsmittel einer Behandlung mit warmem Wasser unter Zusatz einer Kombination eines Enzyms oder vor allem mehrerer Enzyme unterzogen. Diese Enzyme greifen hochmolekulare, organische Verschmutzungen an und überführen diese in eine niedermolekulare, laugenlösliche bzw. wasserlösliche Form. Bei diesen Enzymen handelt es sich vor allem um proteolytische, glucolytische, amylolytische oder pektolytische Enzyme oder Mischungen solcher Enzyme, wie z.B. die Produkte AMG, Ceremix oder Cereflo der Firma Novo Nordisk. Auch Beta-Glucanase eignet sich für den erfindungsgemässen Einsatz, ebenso Enzyme, die Zellwände von Mikroorganismen angreifen, wie z.B. SP 299 der Novo Nordisk. Der enzymbehandelte, mit Filterhilfsmitteln versetzte Trub, insbesondere der Kieselgurtrub, wird anschliessend über ein geeignetes System der Fest-Flüssig-Trennung von der Reinigungslösung getrennt und einem Waschprozess mit Wasser, vorteilhaft mit heissem Wasser, zugeführt. Dieser Waschprozess kann innerhalb oder ausserhalb der Trennvorrichtung durchgeführt werden. Möglich sind weitere, nachgeschaltete Reinigungsstufen, bei denen die organische Beladung, z.B. unter Anwendung verdünnter NaOH von max. 0.5 %, weiter reduziert wird, oder eine weitere Reinigung durch Anwendung oxidierender Mittel wie z.B. Wasserstoffperoxid oder Ozon herbeigeführt wird. Der Kieselgurtrub kann am Ende dieser Behandlung wieder zur Getränkefiltration eingesetzt werden. Die Erfindung lässt sich dabei ersichtlicherweise besonders gut bei der Verwendung von Kieselgur als Filterhilfsmittel einsetzen, da Kieselgur sowohl bei der Enzymbehandlung als auch bei der weiteren Reinigung z.B. mit Oxidationsmittel oder Lauge nicht zerstört wird. Die Erfindung lässt sich aber auch bei anderen Filterhilfsmitteln, insbesondere auch bei anorganischen Filterhilfsmitteln, wie Glas, Silicagel (Kieselgel), Alpha-Aluminiumoxid und dergleichen einsetzen. Auch Mischungen dieser Filterhilfsmittel sind möglich. Bei der Verwendung von Glas als Filterhilfsmittel und der Reinigung mit Lauge muss darauf geachtet werden, dass bei Verwendung von porösem Glas mit niedriger pH-Beständigkeit nur eine sehr schwache Lauge eingesetzt wird oder auf die Laugenreinigung verzichtet wird. Gleiches gilt für Perlite. Bei Silicagel (Kieselgel) wird man in der Regel ganz auf die Laugenreinigung verzichten.

Ausserdem können auch Zellulosefasern oder Kunstfasern eingesetzt werden. Bei Alpha-Zellulose als fibrillierte Faser ist ebenfalls Lauge mit nur niedriger Konzentration einzusetzen. Der Einsatz von Zellulosefasern empfiehlt sich vorwiegend im Gemisch mit anderen Filterhilfsmitteln. Bei den Kunstfasern können vor allem fibrillierte PE- (Polyethylen-) und PP-(Polypropylen-) Fasern eingesetzt werden. Z.B. eignen sich die Fasertypen E400 und E620 (PE) oder Y600 (PP).

Für den Fachmann ist es relativ einfach zu entscheiden, welche dieser Fasern eingesetzt werden können und wie bei der Auswahl zusätzlicher Reinigungsschritte (oxidierende Mittel, Lauge etc.) auf die speziell verwendeten Filterhilfsmittel Rücksicht genommen werden muss.

Als ergänzende Massnahme besteht die Möglichkeit, eine Beschallung des Kieselgurtrub mit Ultraschall während einem der Reinigungsschritte vorzunehmen. Wie aus der Literatur bekannt, werden Extraktionsvorgänge durch Ultraschall in ihrer Wirkung unterstützt (Render, M.; Luhede, J.; Haase, B.; Chemie-Ingenieur-Technik, 64(1992) Nr.5 S. 464-465). Die Effizienz der Reinigung bei fest anhaftendem Schmutz kann damit gesteigert werden. Mit einer derart durchgeführten Reinigung können bis zu 80 % der anhaftenden organischen Verschmutzungen, vorwiegend Hefe und Protein, von der Kieselgur entfernt werden, so dass ein Glühverlust von weniger als 2 GG% (Gewichtsprozent) erzielt wird. Dieser verbleibende Schmutzrest ist filtrationstechnisch und aus hygienischer Sicht nicht bedenklich.

Es besteht die Möglichkeit, die gereinigte Kieselgur (oder andere gereinigte Filterhilfsmittel, wie Perlite oder Glas) einer Fraktionierung in grobe und feinere Partikel zu unterziehen, um das Regenerat, das aufgrund des Verfahrens zwangsläufig eine Mischung aus verschiedenen Partikelgrössen darstellt, den oben beschriebenen Anforderungen an die spezielle Mischung bei der Filtration anzupassen. Diese Fraktionierung kann vorteilhaft über die Anwendung von Hydrozyklonen erfolgen, wie z.B. in der DE-AS-1,063,121 beschrieben. Der Ablauf der unterschiedlichen Möglichkeiten wird in den Ausführungsbeispielen dargestellt.

Als zusätzlicher Vorteil der Erfindung ist zu werten, dass das Handling mit der stark staubenden Kieselgur mit Ausnahme des Ersatzes der geringen Verluste ausschliesslich auf Suspensionen beschränkt bleibt. Damit können aufwendige Staubschutzmassnahmen, die im Normalbetrieb mit 100 % Frischgur zwingend erforderlich sind, entfallen bzw. können wesentlich reduziert werden.

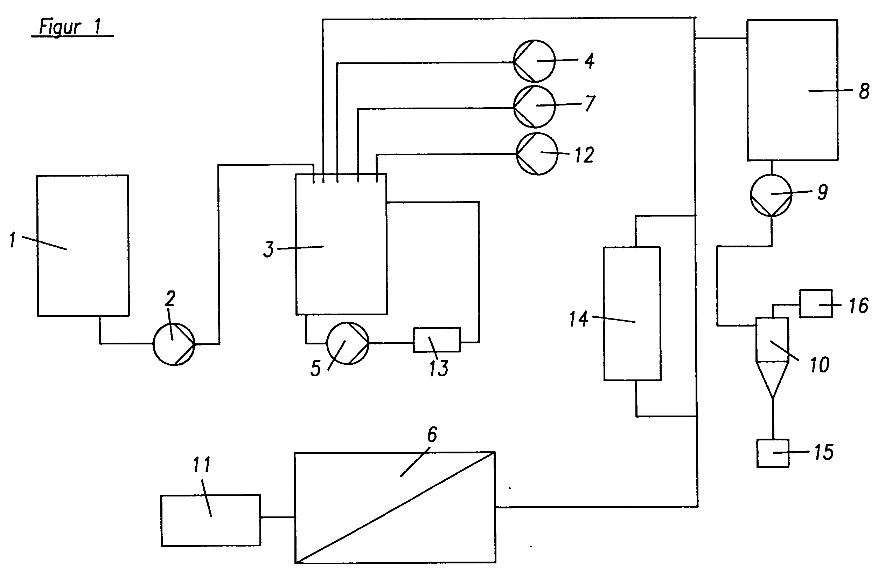

Die Erfindung ist im folgenden in Ausführungsbeispielen anhand der Zeichnung näher erläutert. Alle Beispiele beziehen sich auf die Abbildung 1 und betreffen die Reinigung von Kieselgur, ohne darauf beschränkt zu sein.

### Beispiel 1

Der beim Trubaustrag aus einem Filter anfallende Kieselgurtrub wird in einem Zwischentank 1 gespeichert und durch ein Rührwerk homogen gehalten. Über eine Pumpe 2 wird der Trub einem Reaktionsbehälter 3 zugeführt. Dort erfolgt über beispielsweise eine Dosierpumpe 4 der Zusatz der Enzymmischung Ceremix (enthaltend eine Protease, eine Amylase und eine Beta-Glucanase). Aus diesem Behälter 3 wird der Trub mittels einer Pumpe 5 in eine Feststoffabtrennvorrichtung 6 überführt. Der gewonnene Filterkuchen wird in den Reaktionsbehälter 3 zurückgegeben und kann dort im Umpumpverfahren einer Behandlung in der Ultraschall-Einrichtung 13 zugeführt werden. Das ablaufende Schmutzwasser wird einer nicht weiter dargestellten Wasseraufbereitungsanlage 11 zugeführt. Während dieser Ultraschallbehandlung kann gleichzeitig über eine zweite Dosierpumpe 7 ein Zusatz von Wasserstoffperoxid erfolgen. Damit wird eine reinigende und gleichzeitig keimreduzierende Wirkung erreicht. Nach Abschluss dieses Behandlungsschrittes wird der Kieselgurtrub wiederum der Feststoffretentionsvorrichtung 6 zugeführt, der dort gewonnene Filterkuchen wird in einen Vorratsbehälter 8 überführt. Aus dem Vorratsbehälter 8 kann über eine Pumpe 9 und eine Hydrozyklonkombination 10 mit mindestens einem Hydrozyklon eine Fraktionierung der Kieselgur in Grobgur 15 und feinere Gur 16 vorgenommen werden.

### Beispiel 2

Der beim Trubaustrag aus einem Filter anfallende Kieselgurtrub wird im Zwischentank 1 gespeichert und durch ein Rührwerk homogen gehalten. Ueber eine Pumpe 2 wird der Trub dem Reaktionsbehälter 3 zugeführt. Dort erfolgt über eine Dosierpumpe 4 der Zusatz der Enzymmischung Ceremix. Aus diesem Behälter 3 wird der Trub mittels einer Pumpe 5 in eine Feststoffabtrennvorrichtung 6 überführt. Der gewonnene Filterkuchen wird in den Reaktionsbehälter 3 zurückgegeben und wird dort einer Behandlung in der Ultraschall-Einrichtung 13 zugeführt unter Zusatz von NaOH über eine zweite Dosierpumpe 7. Das ablaufende Schmutzwasser wird einer nicht weiter dargestellten Wasseraufbereitung 11 zugeführt.

Damit wird eine weitergehende reinigende Wirkung erreicht. Nach Abschluss dieses Behandlungsschrittes wird der Kieselgurtrub wiederum der Feststoffretentionsvorrichtung 6 zugeführt, der dort gewonnene Filterkuchen wird in den Reaktionsbehälter 3 zurückgegeben und unter Zusatz einer schwachen Säure (5 - 20 %-ige Phosphorsäure) über eine dritte Dosierpumpe 12 neutralisiert. Nach Abschluss dieses Behandlungsschrittes wird der Kieselgurtrub wiederum der Feststoffretentionsvorrichtung 6 zugeführt, der dort gewonnene Filterkuchen wird in den Vorratsbehälter 8 überführt. Aus dem Vorratsbehälter 8 kann wiederum über eine Pumpe 9 und eine Hydrozyklonkombination 10 mit mindestens einem Hydrozyklon eine Fraktionierung der Kieselgur in Grobgur 15 und feinere Gur 16 vorgenommen werden.

### Beispiel 3

Die Behandlung des Trubes erfolgt analog zu den Beispielen 1 oder 2. Bei der Umlagerung in den Pufferbehälter wird die gereinigte Kieselgur zusätzlich durch einen Wärmetauscher 14 einer Erhitzung mit Temperaturen von 70 °C bis 90 °C für eine Dauer von 15 bis 45 Minuten unterzogen. Dabei sollten mindestens 50 bis 500 Pasteurisationseinheiten erreicht werden, um getränkeschädliche Mikroorganismen abzutöten.

Alle Prozessschritte der Regeneration erfolgen in einer wässrigen Dispersion der Filterhilfsmittel, insbesondere der Kieselgur in Wasser. Dabei beträgt der Feststoffgehalt ca. 10 %G des Wasseranteils. Die abzutrennenden organischen Bestandteile können teils als ungelöst, teils als kolloidal gelöst betrachtet werden. Dies hat zur Folge, dass die Menge des mitgeführten Wassers für die Trennung Schmutz - Wasser von wesentlicher Bedeutung ist. Der Prozess muss so geführt werden, dass ein Ersatz von verschmutztem Wasser mit sauberem Wasser möglich ist. Dadurch kann die organische Belastung der Kieselgur wesentlich reduziert werden.

Da auch die Pumpfähigkeit des Trubes ein Prozessparameter ist, erfolgt die Regeneration unterhalb eines Trockensubstanzanteils von 30 GG% (Gewichtsprozente der Gesamtmenge). Um einen späteren Einsatz zur Filtration zu ermöglichen, sollten Trockensubstanzgehalte von über 10 GG%, vorzugsweise 20 GG% im regenerierten Material vorliegen. Eine Eindickung der Regeneratdispersion ist ebenfalls als Alternative denkbar, da grundsätzlich auch niedrigere Trockensubstanzwerte während des Prozesses möglich sind. Für diese Eindickung kommen z.B. Filter in Verfahrensweisen wie Vakuumfilter, Druckfilter und Bauarten wie Bandfilter, Drehfilter, Blattoder Kerzenfilter in Frage. Auch der Einsatz von Hydrozyklonen, Zentrifugen, Membranfiltern, Querstromfiltern oder Sedimentationsbecken ist denkbar.

### Beispiel 4

Die Vorbereitung des Trubs erfolgt analog zu den Beispielen 1 und 2. Befindet sich der Trub im Reaktionsbehälter 3, erfolgt über eine Dosierpumpe 4 der Zusatz des Enzyms SP 299 der Novo Nordisk zur Auflösung von Hefezellwänden. Im Anschluss an eine 30-minütige bis 10-stündige Enzymbehandlung im Wirkungsoptimum des genannten Enzyms erfolgt über eine zweite Dosierpumpe 7 der Zusatz von Natronlauge in einer Konzentration von 0,3 bis 1,5 %. Aus diesem Behälter wird der Trub mittels einer Pumpe 5 einer Feststoffretentionsvorrichtung 6 zugeführt, der dort gewonnene Filterkuchen wird in den Vorratsbehälter 8 überführt und dabei wie in Beispiel 3 wärmebehandelt.

## Patentansprüche

1. Verfahren zur Reinigung eines Filterhilfsmittels, das in einem Trennprozess zumindest mit organischen Bestandteilen angereichert wurde, dadurch gekennzeichnet, dass das Filterhilfsmittel in Wasser dispergiert und mit Hilfe von einem oder mehreren Enzymen gereinigt wird, wobei solche Enzyme zugesetzt werden, welche die organischen Bestandteile in niedermolekulare Bestandteile überführen, und dass das Filterhilfsmittel in einer weiteren Reinigungsstufe unter Zusatz einer schwachen Lauge mit einer Konzentration unter 1 %, vorzugsweise 0,3 - 0,5 % gereinigt wird.

2. Verfahren zur Reinigung eines Filterhilfsmittels nach Anspruch 1, wobei das Filterhilfsmittel aus in einem Filtrationsprozess mit organischen Bestandteilen angereicherten Kieselgur besteht, dadurch gekennzeichnet, dass anschliessend das Filterhilfsmittel von Wasser und den niedermolekularen Bestandteilen getrennt wird.

3. Verfahren nach einem der Ansprüche 1 oder 2, dadurch gekennzeichnet, dass wenigstens ein Enzym ein Hefezellwände auflösendes Enzym ist.

4. Verfahren nach einem der Ansprüche 1 bis 3, dadurch gekennzeichnet, dass das Filterhilfsmittel in der weiteren Reinigungsstufe unter Zusatz eines Oxidationsmittels mit einer Konzentration zwischen 1 % und 10 %, vorzugsweise 2 - 4 % gereinigt wird.

5. Verfahren nach einem der Ansprüche 1 bis 4, dadurch gekennzeichnet, dass die Reinigung durch eine Beschallung des Filterhilfsmittels mit Ultraschall in wässriger Dispersion unterstützt wird.

6. Verfahren nach einem der Ansprüche 1 bis 5, dadurch gekennzeichnet, dass das Filterhilfsmittel von Wasser und den niedermolekularen Bestandteilen in wenigstens einem Hydrozyklon oder einer Kombination aus mehreren Hydrozyklonen in serieller oder paralleler Anordnung getrennt wird.

7. Verfahren nach einem der Ansprüche 1 bis 5, dadurch gekennzeichnet, dass das Filterhilfsmittel von Wasser und den niedermolekularen Bestandteilen in wenigstens einem Bandfilter in der Ausführung als Vakuum- oder Druckfilter getrennt wird.

8. Verfahren nach einem der Ansprüche 1 bis 5, dadurch gekennzeichnet, dass die Trennvorrichtung ein Vakuumdrehfilter ist.

9. Verfahren nach einem der Ansprüche 1 bis 5, dadurch gekennzeichnet, dass die Trennvorrichtung ein Druckblatt- oder Kerzenfilter ist.

10. Verfahren nach einem der Ansprüche 1 bis 5, dadurch gekennzeichnet, dass die Trennvorrichtung ein Rahmenfilter oder eine Filterpresse ist.

11. Verfahren nach einem der Ansprüche 1 bis 10, dadurch gekennzeichnet, dass die gereinigte Dispersion vor der Wiederverwendung auf 70 - 95 °C erhitzt wird.

12. Verfahren nach einem der Ansprüche 1 bis 11, dadurch gekennzeichnet, dass die gereinigte Dispersion ausserhalb der Anlage getrocknet und dann der Wiederverwendung zugeführt wird.

13. Verfahren nach einem der Ansprüche 1 bis 12, dadurch gekennzeichnet, dass ein anorganisches Filterhilfsmittel verwendet wird.

14. Verfahren nach einem der Ansprüche 1 bis 12, dadurch gekennzeichnet, dass das Filterhilfsmittel Kieselgur, und/oder Zellulose, und/oder PE-Fasern, und/oder PP-Fasern, und/oder Glas, und/oder Perlite, und/oder Silicagel, und/oder Alpha-Aluminiumoxid enthält.

15. Verwendung von Enzymen zur Reinigung eines anorganischen Filterhilfsmittels in wässriger Dispersion, insbesondere aus Kieselgur oder enthaltend Kieselgur, das in einem Trennprozess, insbesondere einem Filtrationsprozess zumindest mit organischen Bestandteilen angereichert wurde, wobei solche Enzyme verwendet werden, welche die organischen Bestandteile in niedermolekulare Bestandteile überführen und/oder die Zellwände von Hefe auflösen, wobei das Filterhilfsmittel in Kombination mit der Verwendung von einer schwachen Lauge mit einer Konzentration unter 1%, vorzugsweise 0,3 bis 0,5% in einer weiteren Reinigungsstufe gereinigt wird.

16. Verwendung wenigstens eines proteolytischen Enzyms und/oder wenigstens eines amylolytischen Enzyms und/oder wenigstens eines pektolytischen Enzyms und/oder wenigstens einer Beta-Glucanase nach Anspruch 16.

17. Verwendung von Enzymen nach Anspruch 16 zur Reinigung von Kieselgur enthaltenden Filterhilfsmitteln, welche in einem Filtrationsprozess mit organischen Bestandteilen angereichert wurde.

## Claims

1. A method of cleaning a filter aid which was enriched in a separation procedure at least with organic constituents, characterised in that the filter aid is dispersed in water and cleaned by means of one or more enzymes, wherein such enzymes are added that convert the organic constituents into low-molecular constituents, and that the filter aid is cleaned in a further cleaning step with the addition of a weak lye with a concentration of below 1%, preferably 0.3 - 0.5%.

2. A method of cleaning a filter aid according to claim 1 wherein the filter aid comprises kieselguhr enriched with organic constituents in a filtration procedure, characterised in that the filter aid is then separated from water and the low-molecular constituents.

3. A method according to one of claims 1 and 2 characterised in that at least one enzyme is a yeast cell wall-dissolving enzyme.

4. A method according to one of claims 1 to 3 characterised in that the filter aid is cleaned in the further cleaning step with the addition of an oxidising agent with a concentration of between 1% and 10%. preferably 2 - 4%.

5. A method according to one of claims 1 to 4 characterised in that the cleaning operation is assisted by irradiation of the filter aid with ultrasound in aqueous dispersion.

6. A method according to one of claims 1 to 5 characterised in that the filter aid is separated from water and the low-molecular constituents in at least one hydrocyclone or a combination of a plurality of hydrocyclones in a serial or parallel arrangement.

7. A method according to one of claims 1 to 5 characterised in that the filter aid is separated from water and the low-molecular constituents in at least one belt filter in the form of a vacuum or pressure filter.

8. A method according to one of claims 1 to 5 characterised in that the separation apparatus is a rotary vacuum filter.

9. A method according to one of claims 1 to 5 characterised in that the separation apparatus is a pressure sheet or candle filter.

10. A method according to one of claims 1 to 5 characterised in that the separation apparatus is a frame filter or a filter press.

11. A method according to one of claims 1 to 10 characterised in that the cleaned dispersion is heated to 70 - 95°C before re-use.

12. A method according to one of claims 1 to 11 characterised in that the cleaned dispersion is dried outside the installation and then passed to the re-use.

13. A method according to one of claims 1 to 12 characterised in that an inorganic filter aid is used.

14. A method according to one of claims 1 to 12 characterised in that the filter aid contains kieselguhr and/or cellulose and/or PE-fibres and/or PP-fibres and/or glass and/or perlite and/or silica gel and/or alpha-aluminium oxide.

15. Use of enzymes for cleaning an inorganic filter aid in aqueous dispersion, in particular consisting of or containing kieselguhr, which was enriched in a separation procedure, in particular a filtration procedure, at least with organic constituents, wherein such enzymes are used which convert the organic constituents into low-molecular constituents and/or dissolve the cell walls of yeast, wherein the filter aid is cleaned in combination with the use of a weak lye having a concentration of below 1%, preferably 0.3 to 0.5%, in a further cleaning step.

16. Use of at least one proteolytic enzyme and/or at least one amylolytic enzyme and/or at least one pectolytic enzyme and/or at least one beta-glucanase according to claim 16.

17. Use of enzymes according to claim 16 for cleaning kieselguhr-containing filter aids which were enriched in a filtration procedure with organic constituents.

## Revendications

1. Procédé pour purifier un adjuvant de filtration, qui, dans le cadre d'une opération de séparation a été enrichi au moins en constituants organiques, caractérisé en ce que l'adjuvant de filtration est dispersé dans l'eau et est purifié à l'aide d'une ou plusieurs enzymes, auquel cas on ajoute des enzymes qui convertissent les constituants organiques en constituants à faible masse moléculaire, et que l'adjuvant de filtration est, dans une autre étape de purification, purifié par addition d'une lessive faible, à une concentration inférieure à 1 % et de préférence de 0,3 à 0,5 %.

2. Procédé de purification d'un adjuvant de filtration selon la revendication 1, dans lequel l'adjuvant de filtration est constitué d'un kieselguhr enrichi en constituants organiques dans une opération de filtration, caractérisé en ce que l'adjuvant de filtration est ensuite séparé de l'eau et des constituants à faible masse moléculaire.

3. Procédé selon la revendication 1 ou 2, caractérisé en ce qu'au moins une enzyme est une enzyme qui dissout la paroi de cellule de levure.

4. Procédé selon l'une des revendications 1 à 3, caractérisé en ce que l'adjuvant de filtration est, dans une autre étape de purification, purifié par addition d'un agent oxydant à une concentration de 1 à 10 % et de préférence de 2 à 4 %.

5. Procédé selon l'une des revendications 1 à 4, caractérisé en ce que la purification est facilitée par exposition de l'adjuvant de filtration à des ultrasons, en dispersion aqueuse.

6. Procédé selon l'une des revendications 1 à 5, caractérisé en ce que l'adjuvant de filtration est séparé de l'eau et des constituants à faible masse moléculaire dans au moins un hydrocyclone ou une combinaison de plusieurs hydrocyclones disposés en série ou en parallèle.

7. Procédé selon l'une des revendications 1 à 5, caractérisé en ce que l'adjuvant de filtration est séparé de l'eau et de constituants à faible masse moléculaires dans au moins un filtre à bande, configuré comme un filtre à vide ou un filtre sous pression.

8. Procédé selon l'une des revendications 1 à 5, caractérisé en ce que le dispositif de séparation est un filtre rotatif sous vide.

9. Procédé selon l'une des revendications 1 à 5, caractérisé en ce que le dispositif de séparation est un filtre à feuille sous pression ou une bougie filtrante.

10. Procédé selon l'une des revendications 1 à 5, caractérisé en ce que le dispositif de séparation est un filtre à cadre ou un filtre-presse.

11. Procédé selon l'une des revendications 1 à 10, caractérisé en ce que la dispersion purifiée est, avant réutilisation, chauffée à 70 - 95°C.

12. Procédé selon l'une des revendications 1 à 11, caractérisé en ce que la dispersion purifiée est séchée à l'extérieur de l'installation puis est envoyée à la zone de réutilisation.

13. Procédé selon l'une des revendications 1 à 12, caractérisé en ce qu'on utilise un adjuvant de filtration minéral.

14. Procédé selon l'une des revendications 1 à 12, caractérisé en ce que l'adjuvant de filtration contient du kieselguhr et/ou de la cellulose et/ou des fibres de PE et/ou des fibres de PP et/ou du verre et/ou de la perlite et/ou du gel de silice et/ou de l'oxyde d'aluminium alpha.

15. Utilisation d'enzymes pour purifier un adjuvant de filtration minérale en dispersion aqueuse, en particulier constitué de kieselguhr ou contenant du kieselguhr qui, dans une opération de séparation, en particulier une opération de filtration, a été enrichi au moins en des constituants organiques, dans laquelle on utilise des enzymes qui convertissent les constituants organiques en constituants à faible masse moléculaire et/ou dissolvent les parois des cellules de levure, l'adjuvant de filtration étant purifié, dans une autre étape de purification, en combinaison avec l'utilisation d'une lessive faible à une concentration inférieure à 1 %, de préférence de 0,3 à 0,5 %.

16. Utilisation d'au moins une enzyme protéolytique et/ou d'au moins une enzyme amylolytique et/ou d'au moins une enzyme pectolytique et/ou d'au moins une bêta-glucanase selon la revendication 15.

17. Utilisation d'enzymes selon la revendication 16 pour purifier des adjuvants de filtration contenant du kieselguhr, qui, dans le cadre d'une opération de filtration, ont été enrichis en constituants organiques.
